# EUROPEAN PATENT APPLICATION

(11) **EP 4 280 349 A1**
(43) Date of publication of application: **22.11.2023**
(21) Application number: 22908811.7
(22) Date of filing: 02.04.2022
(51) Int. Cl.: H01M 10/613, H01M 10/6569, C09K 5/04

(54) **BATTERY PACK AND ELECTRIC DEVICE COMPRISING SAME**

(71) Applicant: Contemporary Amperex Technology Co., Limited, Ningde City, Fujian 352100 (CN)
(72) Inventor: QIN, Meng, Ningde City, Fujian 352100 (CN); HUANG, Qisen, Ningde City, Fujian 352100 (CN)
(74) Representative: Herrmann, Uwe
(86) International application number: PCT/CN2022/085085
(87) International publication number: WO 2023/184541

(57) **Abstract**

The present application provides a battery pack and an electrical device including the same. The battery pack includes a battery cell at least partially immersed in a refrigerant; a case for accommodating the battery cell and the refrigerant and provided with an outlet and an inlet for the refrigerant; a circulating pipeline located outside the case, connecting the outlet and the inlet for the refrigerant to form a closed system; a heat exchanger and a condenser located on the circulating pipeline; a pressure measuring module provided with one end arranged inside the case and configured for detecting an internal pressure of the case; a temperature monitoring device for detecting a temperature of the battery cell and a fluorine-containing cooling medium in real time; and a battery control module for managing the battery cell; where the refrigerant includes at least a first fluorine-containing cooling medium selected from a fluorinated ether and a second fluorine-containing cooling medium selected from one or more of a fluorinated hydrocarbon, a perfluoroketone or a fluorinated alcohol. The battery pack according to the present application has an efficient heat dissipation function and good flame retardant properties.

## Description

### TECHNICAL FIELD

The present application relates to the technical field of batteries, in particular to a battery pack and an electrical device including the same.

### BACKGROUND

In recent years, with the application range of lithium-ion batteries being more and more extensive, lithium-ion batteries are widely used in energy storage power systems such as hydraulic power, firepower, wind power and solar power stations, as well as electric tools, electric bicycles, electric motorcycles, electric vehicles, military equipment, aerospace and other fields. In practical applications, lithium-ion batteries are usually integrated into battery packs for use. However, with the increasing integration of battery packs, the heat dissipation problem of battery packs is becoming more and more serious, which easily leads to safety problems. Therefore, how to provide a battery pack with efficient heat dissipation function and better safety performance is an urgent problem for technicians.

### SUMMARY

The present application is carried out in view of the above-mentioned subject matter, and aims to provide a battery pack with good heat dissipation function and good safety performance and an electrical device including the battery pack.

The first aspect of the present application provides a battery pack, which includes:
a battery cell at least partially immersed in a refrigerant;
a case accommodating the battery cell and the refrigerant and provided with an outlet and an inlet for the refrigerant;
a circulating pipeline located outside the case, connecting the outlet and the inlet for the refrigerant to form a closed system;
a heat exchanger and a condenser located on the circulating pipeline;
a pressure measuring module provided with one end arranged inside the case and configured for detecting an internal pressure of the case;
a temperature monitoring device for detecting a temperature of the battery cell and a fluorine-containing cooling medium in real time; and
a battery control module for managing the battery cell;
where the refrigerant includes at least a first fluorine-containing cooling medium and a second fluorine-containing cooling medium, the first fluorine-containing cooling medium is selected from a fluorinated ether, and the second fluorine-containing cooling medium is selected from one or more of a fluorinated hydrocarbon, a perfluoroketone or a fluorinated alcohol.

By using a non-azeotropic refrigerant comprising the first fluorine-containing cooling medium and the second fluorine-containing cooling medium, the battery pack described in the present application can achieve the complementary advantages of each cooling medium, so that the battery pack has an efficient heat dissipation function and also has good flame retardant properties, thereby improving the safety performance of the battery pack. In addition, the use of two cooling media in combination also contributes to smoother cooling system operation.

In some embodiments, optionally, the first fluorine-containing cooling medium accounts for 40-90%, optionally accounts for 43-82%, more optionally accounts for 45-73%, and further optionally accounts for 49-59% of a total weight of the refrigerant; and
the second fluorine-containing cooling medium accounts for 10-60%, optionally accounts for 16-55%, more optionally accounts for 25-53%, and further optionally accounts for 39-49% of the total weight of the refrigerant.

When the amounts of the first fluorine-containing cooling medium and the second fluorine-containing cooling medium are within the above-mentioned ranges, respectively, the cooling effect and flame retardant effect of the refrigerant can be sufficiently exhibited.

In some embodiments, optionally, a ratio of amounts by weight of the first fluorine-containing cooling medium and the second fluorine-containing cooling medium is 4-1: 1, and optionally 1.5-1: 1.

When the amount ratio of the first fluorine-containing cooling medium to the second fluorine-containing cooling medium is within the above range, it facilitates more efficient use of the refrigerant's cooling effect and flame retardant effect, thus enhancing the safety performance of the battery pack.

In some embodiments, optionally, a sum of the first fluorine-containing cooling medium and the second fluorine-containing cooling medium accounts for more than 95% of the total weight of the refrigerant.

In some embodiments, optionally, the refrigerant has a filing rate of 80%-95%, optionally 85%-90%.

In some embodiments, optionally, the first fluorine-containing cooling medium is selected from one or more of the following materials: 1, 1, 2, 2-tetrafluoroethyl methyl ether, methyl nonfluorobutyl ether, 1, 1, 2, 2-tetrafluoroethyl-2, 2, 2-trifluoroethyl ether, 2H-hexafluoropropyl-2, 2, 3, 3-tetrafluoroether; and
the second fluorine-containing cooling medium is selected from one or more of the following materials: heptafluoropropane, hexafluoropropane, trichloromonofluoromethane, trichlorotrifluoroethane, perfluorohexanone, hexafluoropropene dimer, hexafluoro-2-methylisopropanol.

In some embodiments, optionally, the temperature monitoring device includes:
an optical fiber;
a reflected light elimination device; and
a light source module comprising a light source, a light source driving module, a light detection module, a control module and an optical coupler.

The temperature monitoring device described above is simple in structure, small in size and has good anti-electromagnetism disturbance ability, and can achieve distributed temperature monitoring.

In some embodiments, optionally, the reflected light elimination device is formed by winding the optical fiber in one or more turns and fixing the optical fiber.

In some embodiments, optionally, the optical fiber is coated with a metal material resistant to corrosion by the fluorine-containing cooling medium at an outside, and the metal material is optionally nickel or copper.

The sensitivity of temperature monitoring is facilitated when the outer side of the optical fiber is coated with the above material.

The second aspect of the application provides an electrical device, which includes the battery pack as described in the first aspect. The electrical device can be prepared using methods commonly used in the art.

The electrical device according to the present application includes the battery pack as described in the first aspect of the present application and thus has at least the same advantages as the battery pack.

### [Beneficial Effect]

The non-azeotropic mixed refrigerant comprising the first fluorine-containing cooling medium and the second fluorine-containing cooling medium in the battery pack described in the present application can achieve the complementary advantages of each pure substance, so that the battery pack has an efficient heat dissipation function and also has good flame retardant properties, thereby improving the safety performance of the battery pack. In addition, the use of two cooling media in combination also contributes to smoother cooling system operation.

### BRIEF DESCRIPTION OF DRAWINGS

FIG. 1 is a schematic structural diagram of a battery pack according to the first aspect of the present application.
FIG. 2 is a schematic structural diagram of a temperature monitoring device according to present application.
FIG. 3 is a schematic diagram of a square battery assembled according to an embodiment of the present application.
FIG. 4 is an exploded view of the square battery according to an embodiment of the present application.
FIG. 5 is a schematic diagram of an electrical device according to an embodiment of the present application.

### Illustrations of reference numerals:

101-battery pack; 102-refrigerant; 103-case; 104-refrigerant outlet; 105-refrigerant inlet; 106-circulating pipeline; 107-condenser; 108-radiator; 201-reflected light elimination device; 202-optical fiber; 203-light source; 3-secondary battery; 31-housing; 32-electrode assembly; 33-cap assembly.

### DETAILED DESCRIPTION OF EMBODIMENTS

Hereinafter, embodiments of a battery pack and an electrical device including the same of the present application are described in detail with appropriate reference to the accompanying drawings. However, there will be cases where unnecessary details are omitted. For example, there are cases where detailed descriptions of well-known matters and duplicate descriptions of actually the same structures are omitted. This is to avoid the following description becoming unnecessarily verbose for ease of understanding by those skilled in the art. In addition, the drawings and the following descriptions are provided for the full understanding of the present application by those skilled in the art and are not intended to limit the subject matter recited in the claims.

The "range" disclosed herein is defined in the form of a lower limit and an upper limit, a given range being defined by selecting a lower limit and an upper limit. The selected lower and upper limits define the boundaries of a particular range. The ranges defined in this manner may include or exclude end values and may be arbitrarily combined, i.e., any lower limit may be combined with any upper limit to form a range. For example, if the ranges 60-120 and 80-110 are listed for a particular parameter, it is also expectable that such ranges are understood as 60-110 and 80-120. In addition, if the minimum range values 1 and 2 are listed, and if the maximum range values 3, 4 and 5 are listed, the following ranges are all expectable: 1-3, 1-4, 1-5, 2-3, 2-4 and 2-5. In the present application, unless otherwise specified, the numerical range "a-b" denotes an abbreviated representation of a combination of any real numbers between a and b, where both a and b are real numbers. For example, the numerical range "0-5" means that all the real numbers between "0-5" have been listed herein, and "0-5" is only an abbreviated representation of these numerical combinations. In addition, when a parameter is expressed as an integer greater than or equal to 2, it is equivalent to disclosing that the parameter is, for example, an integer 2, 3, 4, 5, 6, 7, 8, 9, 10, 11, 12, and the like.

All embodiments and optional embodiments of the present application may be combined with each other to form a new technical solution unless specifically stated.

Unless otherwise specified, all technical features and optional technical features of the present application may be combined with each other to form a new technical solution.

Unless specifically stated, all steps of the present application may be performed sequentially or randomly, preferably sequentially. For example, the method includes steps (a) and (b), indicating that the method may include steps (a) and (b) proceeding sequentially, and may also include steps (b) and (a) proceeding sequentially. For example, the method may further include step (c), indicating that step (c) may be added to the method in any order, for example, the method may include steps (a), (b) and (c), may also include steps (a), (c) and (b), and may also include steps (c), (a) and (b), and so on.

Unless otherwise specified, references to "comprise" and "include" in the present application are open-ended and may also be closed-ended. For example, the "comprise" and "include" may indicate that other components not listed may also be comprised or included, or only listed components may be comprised or included.

Unless specifically stated, the term "or" is inclusive in the present application. For example, the phrase "A or B" means "A, B, or both A and B". More specifically, any of the following conditions satisfies the condition "A or B": A is true (or existent) and B is false (or absent); A is false (or absent) and B is true (or existent); or both A and B are true (or existent).

It is to be understood by those skilled in the art that the drawings of the present application are intended to illustrate the invention only and not to limit the invention. The positions and connection modes of components in the drawings have no limiting effect on the technical solution of the present application.

Unless otherwise stated, in the present application, the term "lower surface of the case" refers to the surface of the case containing the battery cell and refrigerant that is located at the bottom in a direction of gravity, with liquid refrigerant above the "lower surface". Conversely, the term "upper surface of the case" refers to the surface of the case opposite the "lower surface".

The term "non-azeotropic mixed refrigerant" in the present application refers to a refrigerant formed by mixing two or more substances. The properties of non-azeotropic refrigerants are similar to those of pure refrigerants of each composition. The non-azeotropic mixed refrigerants can be used to achieve the advantage complementary of the refrigerants.

It should be noted that the term "filing rate" in the present application refers to the percentage of the volume of refrigerant to the remaining space of the case except the volume of members such as the battery cell.

In practical work, the inventor found that during the use of the battery pack, heat dissipation problems often occur due to various reasons, thus affecting the safety performance of the battery pack. After conducting a large number of studies, the inventor unexpectedly discovered that by using a non-azeotropic mixture of a first fluorinated cooling medium selected from fluoroethers and a second fluorinated cooling medium selected from one or more of fluorinated hydrocarbons, perfluoroketones or fluorinated alcohols as refrigerants of battery packs, not only efficient refrigeration can be achieved, but also flame retardant properties of battery packs can be improved, thereby improving safety performance of battery packs. In addition, the use of two cooling media in combination also contributes to smoother cooling system operation.

### [Battery Pack]

The first aspect of the present application provides a battery pack, which includes:
a battery cell at least partially immersed in a refrigerant;
a case accommodating the battery cell and the refrigerant and provided with an outlet and an inlet for the refrigerant;
a circulating pipeline located outside the case, connecting the outlet and the inlet for the refrigerant to form a closed system;
a heat exchanger and a condenser located on the circulating pipeline;
a pressure measuring module provided with one end arranged inside the case and configured for detecting an internal pressure of the case;
a temperature monitoring device for detecting a temperature of the battery cell and a fluorine-containing cooling medium in real time; and
a battery control module for managing the battery cell;
where the refrigerant includes at least a first fluorine-containing cooling medium and a second fluorine-containing cooling medium, the first fluorine-containing cooling medium is selected from a fluorinated ether, and the second fluorine-containing cooling medium is selected from one or more of a fluorinated hydrocarbon, a perfluoroketone or a fluorinated alcohol.

By using a non-azeotropic refrigerant comprising the first fluorine-containing cooling medium and the second fluorine-containing cooling medium, the battery pack described in the present application can achieve the complementary advantages of each cooling medium, so that the battery pack has an efficient heat dissipation function and also has good flame retardant properties, thereby improving the safety performance of the battery pack. In addition, the use of two cooling media in combination also contributes to smoother cooling system operation.

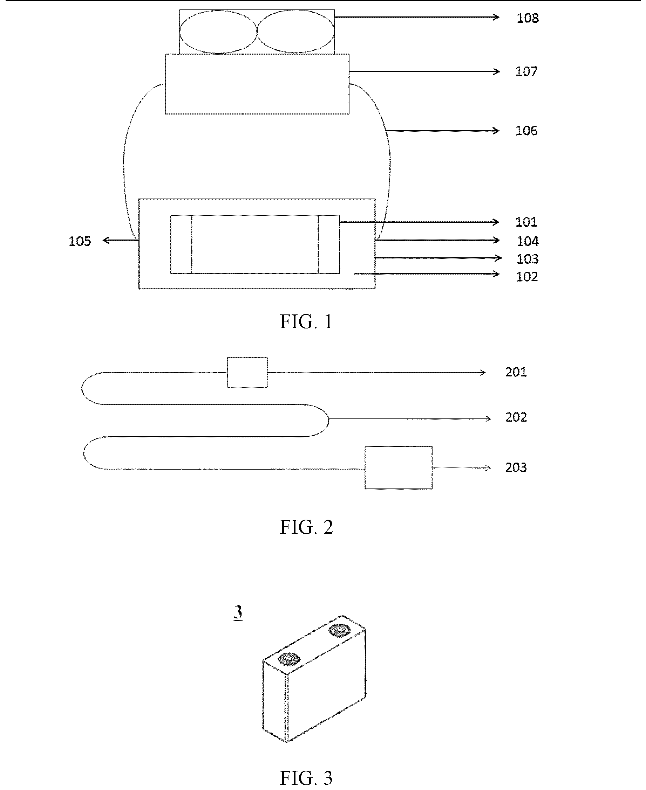

The battery pack described in the present application will be described in detail below with reference to the accompanying drawings. As shown in FIG. 1, when the battery pack is used under normal working conditions and generates heat, the refrigerant will absorb the heat generated by the battery pack, resulting in an increase in the temperature of the refrigerant. At the same time, part of the refrigerant vaporizes due to absorbing heat, which leads to an increase in the pressure in the case. When the temperature rises or the pressure increases to a certain extent, the temperature of the battery pack measured by the temperature monitoring device is higher than the set temperature or the pressure in the case measured by the pressure measuring device is higher than the set pressure. The temperature monitoring device and the pressure measuring device transmit the measured temperature and pressure data to the battery control module, and the battery control module decides whether to start the refrigerant circulation process based on the received data. When the battery control module starts the refrigerant circulation process, the pump arranged on the circulating pipeline will suck the refrigerant from the case from the refrigerant outlet on the case. The sucked refrigerant is pumped into the heat exchanger on the circulating pipeline, and most of the heat is removed by forced convection heat transfer by air. After leaving the heat exchanger, the refrigerant enters the condenser on the circulating pipeline. Based on the real-time detected temperature and pressure data, the battery control module controls the condenser to further reduce the temperature of the refrigerant and liquefy a small part of the refrigerant gas from the heat exchanger at the same time. After leaving the condenser, the refrigerant continues to be pumped to the case and enters the case through the refrigerant inlet on the case.

When the battery pack is in extreme conditions, for example, the battery pack generating a large amount of heat due to battery overcharge or collision, the battery control module will control the pump to suck more refrigerant from the case faster after receiving the signals transmitted by the temperature monitoring device and the pressure measuring device, thus accelerating the circulation of refrigerant. At the same time, the battery control module will control the heat exchanger and condenser to further reduce the temperature of the refrigerant delivered to the circulating pipeline. In addition, an upper surface of the case is provided with a pressure relief valve. When the pressure in the case exceeds the preset safety threshold (usually 2-4Kpa), the battery control system will control to open the safety valve to relieve the pressure from the case. In order to avoid the serious consequences caused by the failure of the battery control system, the upper surface of the case is also provided with an explosionproof film, which can bear a certain limit of pressure. When the pressure in the case exceeds the preset safety threshold and the battery control system does not control to open the pressure relief valve, as the pressure continues to increase (usually the maximum pressure that the explosionproof film can bear is 1Kpa higher than the safety threshold), the explosionproof film will break due to the impact of the internal pressure of the case, thus reducing the internal pressure of the case to avoid serious consequences.

The temperature and pressure of the battery cell preset in the case under normal working conditions are not particularly limited in the present application, and can be set according to actual working conditions. Under normal circumstances, the temperature of the battery cell in the case under normal working conditions is 30-50°C, and the corresponding pressure in the case is 1.0-1.2 Kpa.

In some embodiments, optionally, the outlet for the refrigerant is located at the geometrical center of the lower surface of the case and the inlet for the refrigerant is located at the geometrical center of the upper surface of the case. When the outlet and the inlet for the refrigerant conform to the above arrangements, the refrigeration effect of the refrigerant can be brought into full play.

In some embodiments, a refrigerant spray device is optionally provided below the refrigerant inlet in the case to provide a more uniform distribution of the refrigerant as it enters the case through the refrigerant inlet. The spray device is arranged on the case, and the geometric center of the spray device coincides with the geometric center of the upper surface of the case in the direction perpendicular to the upper surface of the case.

The battery pack described in the present application is further described below with the example that the first fluorine-containing cooling medium is 1, 1, 2, 2-tetrafluoroethyl methyl ether (boiling point 36-37°C at atmospheric pressure) and the second fluorine-containing cooling medium is hexafluoropropylene dimer (boiling point 56-61°C at atmospheric pressure).

For lithium iron phosphate battery packs, a non-azeotropic mixture of 1, 1, 2, 2-tetrafluoroethyl methyl ether and hexafluoropropylene dimer with a weight ratio of 1: 1 was used as cooling medium. In addition, 0.5-2.0 wt% of antioxidant based on the total weight of the refrigerant can be added to the refrigerant to prevent the refrigerant from being oxidized; and 0.5-2.5 wt% of preservative based on the total weight of the refrigerant is added to prevent corrosion of the refrigerant to the battery pack assembly. For example, in one embodiment, the pressure within the case can be set to 1 bar. 1, 1, 2, 2-tetrafluoroethyl methyl ether began to vaporize when the pressure of the battery pack sealing system was set to 1 bar and the temperature of the battery pack reached 36°C. In the non-azeotropic mixture, there are different components in gas phase and liquid phase, more 1, 1, 2, 2-tetrafluoroethyl methyl ether exists in gas phase and more hexafluoropropylene dimer exists in liquid phase. When evaporating at constant pressure, the temperature is constantly changing and slipping from low to high, which reduces the heat transfer temperature difference in the phase change process, and the heat in the battery pack is continuously absorbed, which improves the refrigeration efficiency of the whole battery pack system. At the same time, hexafluoropropylene dimer increases the good flame retardant properties of the whole refrigeration system.

In some embodiments, optionally, the antioxidant is selected from the group consisting of bisphenol compounds, such as one or more of bisphenol A, bisphenol B, bisphenol F, bisphenol AF, tetrabromobisphenol A.

In some embodiments, optionally, the preservative is selected from the group consisting of imidazole compounds, such as one or more of benzimidazole, imidazolidinyl urea, diazolidinyl urea.

According to the present application, the circulation rate of refrigerant can be adjusted according to the working condition of the battery pack. When the battery pack has more heat dissipation, the circulation rate of refrigerant can be appropriately increased to remove more heat from the battery pack; and when the heat dissipation of the battery pack is less, the circulation rate of refrigerant can be appropriately reduced to decrease the energy consumption of the battery pack. Alternatively, in the present application, the circulation rate of the refrigerant is 2-28 kg/h, optionally 4-20 kg/h.

In some embodiments, optionally, the cooling system may reduce the temperature of the battery pack by 5-30°C, optionally 10-25°C, under smooth operating conditions of the battery pack described herein.

In some embodiments, optionally, the first fluorine-containing cooling medium accounts for 40-90%, optionally accounts for 43-82%, more optionally accounts for 45-73%, and further optionally accounts for 49-59% of a total weight of the refrigerant; and
the second fluorine-containing cooling medium accounts for 10-60%, optionally accounts for 16-55%, more optionally accounts for 25-53%, and further optionally accounts for 39-49% of the total weight of the refrigerant.

When the amounts of the first fluorine-containing cooling medium and the second fluorine-containing cooling medium are within the above-mentioned ranges, respectively, the cooling effect and flame retardant effect of the refrigerant can be sufficiently exhibited.

In some embodiments, optionally, a ratio of amounts by weight of the first fluorine-containing cooling medium and the second fluorine-containing cooling medium is 4-1: 1, and optionally 1.5-1: 1.

When the ratio of amounts of the first fluorine-containing cooling medium to the second fluorine-containing cooling medium is within the above range, it facilitates more efficient use of the refrigerant's cooling effect and flame retardant effect, thus enhancing the safety performance of the battery pack.

In some embodiments, optionally, a sum of the first fluorine-containing cooling medium and the second fluorine-containing cooling medium accounts for more than 95% of the total weight of the refrigerant. When the sum of the first fluorine-containing cooling medium and the second fluorine-containing cooling medium is within the above-mentioned range, the stability of the cooling medium can be ensured and the internal mechanical structure of the battery pack is protected.

In some embodiments, optionally, the refrigerant has a filing rate of 80%-95%, optionally 85%-90%.

In some embodiments, optionally, the first fluorine-containing cooling medium is selected from one or more of the following materials: 1, 1, 2, 2-tetrafluoroethyl methyl ether, methyl nonfluorobutyl ether, 1, 1, 2, 2-tetrafluoroethyl-2, 2, 2-trifluoroethyl ether, 2H-hexafluoropropyl-2, 2, 3, 3-tetrafluoroether; and
the second fluorine-containing cooling medium is selected from one or more of the following materials: heptafluoropropane, hexafluoropropane, trichloromonofluoromethane, trichlorotrifluoroethane, perfluorohexanone, hexafluoropropene dimer, hexafluoro-2-methylisopropanol.

In some embodiments, optionally, the temperature monitoring device includes:
an optical fiber;
a reflected light elimination device; and
a light source module comprising a light source, a light source driving module, a light detection module, a control module and an optical coupler.

In some embodiments, optionally, the optical fiber is disposed inside the battery pack to more accurately monitor changes in the temperature of the battery pack.

In some embodiments, optionally, the reflected light elimination device is installed at the end of the optical fiber.

The working principle of the temperature monitoring device is briefly explained as follows: as shown in FIG. 2, after the temperature monitoring device is enabled, the control module controls the light source driving module to emit a pulsed optical signal, which enters into the optical fiber arranged inside the battery pack through the optical coupler. The incident optical signal is dissipated by the reflected light elimination device. At the same time, the incident optical signal can excite the fluorescent material in the optical fiber, and the fluorescence enters the optical detection module through the optical coupler. The optical detection module obtains the fluorescence signal and transmits the signal to the control module. When the temperature changes at a place on the optical fiber arranged inside the battery pack, the fluorescence signal emitted there will also change. The optical detection module can obtain the changed fluorescence signal and transmit the signal to the control module. The control module calculates the temperature change, so as to achieve the purpose of monitoring the internal temperature change of the battery pack.

The temperature monitoring device described above is simple in structure, small in size and has good anti-electromagnetism disturbance ability, and can achieve distributed temperature monitoring.

In some embodiments, optionally, the reflected light elimination device is formed by winding the optical fiber in one or more turns and fixing the optical fiber.

In some embodiments, optionally, the optical fiber is coated with a metal material resistant to corrosion by the fluorine-containing cooling medium at an outside, and the metal material is optionally nickel or copper.

The sensitivity of temperature monitoring is facilitated when the outer side of the optical fiber is coated with the above material.

The battery pack according to the present application may be prepared using methods commonly used in the art. For example, the battery pack of the present application may be prepared by the following steps:
Step 1: firstly, assembling a case, a battery cell, a circulating pipeline, a heat exchanger, a condenser, a pressure measuring module, a temperature monitoring module and a battery control module to ensure that the inside of the whole battery pack is in a sealed state;
Step 2: vacuumizing the inside of the case through the packaging opening on the case until the pressure in the case is less than 1⁻¹⁰ Pa, and keeping the inside of the battery pack in a vacuum state;
Step 3: filling refrigerant into the case after vacuumizing in Step 2 to complete the manufacture of the battery pack.

In some embodiments, optionally, the filing rate of the refrigerant should be 80%-90% of the remaining space of the case except the components such as the battery cell.

When the filing rate of the refrigerant is within the above range, the cooling effect on the battery pack can be increased without affecting the assembly of the entire battery pack.

It should be noted that the present application has no special requirements on the battery module and the secondary battery constituting the battery pack, and the battery module and the secondary battery commonly used in the art can be adopted. Usually, the secondary battery includes a positive electrode plate, a negative electrode plate, an electrolyte and a separator. During the charging and discharging process of the battery, active ions are inserted and deserted back and forth between the positive electrode plate and the negative electrode plate. Electrolyte conducts ions between positive and negative electrode plates. The separator is arranged between the positive electrode plate and the negative electrode plate, which mainly plays the role of preventing short circuit between the positive and negative electrodes and can make ions pass through.

FIG. 3 is an example of a square secondary battery which may be made of a positive electrode plate, a negative electrode plate and a separator by a winding process or a lamination process. Generally, the secondary battery may include an outer package for encapsulating the above-mentioned electrode assembly and electrolyte.

In some embodiments, the outer packaging of the secondary battery may be a hard case, such as a hard plastic case, an aluminum case, a steel case, etc. The outer package of the secondary battery can also be a pouch, such as a bag-type pouch. The material of the pouch can be plastic, such as polypropylene, polybutylene terephthalate, polybutylene succinate and the like.

The shape of the secondary battery is not specifically limited in the present application, which may be cylindrical, square or any other shape.

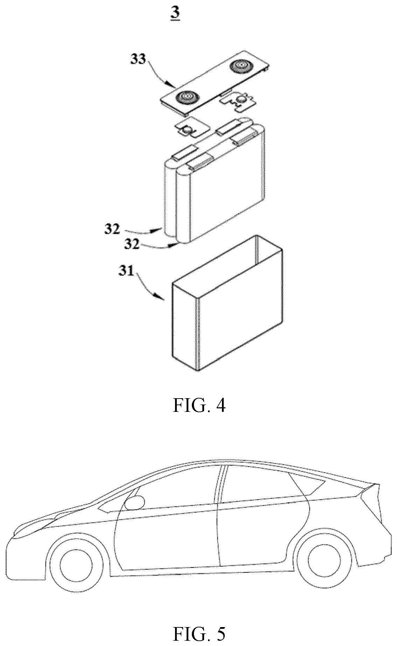

In some embodiments, referring to FIG. 4, the outer package may include a housing 31 and a cover plate 33. The housing 31 may include a bottom plate and a side plate connected to the bottom plate, and the bottom plate and the side plate are enclosed to form an accommodating cavity. The housing 31 has an opening communicated with the accommodating cavity, and the cover plate 33 can cover the opening to close the accommodating cavity. The positive electrode plate, the negative electrode plate, and the separator may be formed by a winding process or a lamination process to form the electrode assemblies 32. The electrode assemblies 32 are encapsulated in the accommodating cavity. The electrolyte is infiltrated in the electrode assemblies 32. The number of electrode assemblies 32 included in the secondary battery 3 may be one or more, which can be selected by a person skilled in the art according to specific actual needs.

### [Electrical Device]

The second aspect of the application provides an electrical device, which includes the battery pack as described in the first aspect of the present application. The battery pack according to the first aspect of the present application can be used as a power source of the electrical device, and can also be used as an energy storage unit of the electrical device. The electrical device may include, but is not limited to, electric vehicles (e.g., pure electric vehicles, hybrid electric vehicles, plug-in hybrid electric vehicles, electric bicycles, electric scooters, electric golf carts, electric trucks, etc.), electric trains, ships and satellites, energy storage systems, etc.

FIG. 5 shows an electrical device as an example. The electrical device is a pure electric vehicle, a hybrid electric vehicle, or a plug-in hybrid electric vehicle, etc.

### Embodiments

Hereinafter, embodiments of the present application will be described. The embodiments described below are exemplary and are intended for explanation only and not to be construed as limiting. If no specific technology or conditions are indicated in the embodiments, the embodiments shall be carried out according to the technology or conditions described in the literature in the art or according to the product specification. The reagents or instruments used, where the manufacturer is not specified, are conventional products available commercially.

The sources of raw materials used in the embodiments of the present application are as follows:

| Raw material | Manufacturer | Specification |
|---|---|---|
| 1, 1, 2, 2-tetrafluoroethyl methyl ether | Sinopharm group chemical reagent co., ltd | 98% |
| Hexafluoropropylene dimer | Sinopharm group chemical reagent co., ltd | 98% |
| Perfluorohexanone | Sinopharm group chemical reagent co., ltd | 98% |
| Hexafluoro-2-methyl isopropanol | Sinopharm group chemical reagent co., ltd | 98% |

### Embodiments

### Embodiment 1

A case, a battery cell, a circulating pipeline, a heat exchanger, a condenser, a pressure measuring module, a temperature monitoring module and a battery control module are assembled to ensure that the inside of the whole battery pack is in a sealed state. The inside of the case is vacuumized through the packaging opening on the case until the pressure in the case is less than 1⁻¹⁰ Pa, and the inside of the battery pack is kept in a vacuum state. Refrigerant is filled into the vacuumized case to complete the manufacture of battery pack.

The case is 820 mm in length, 630 mm in width, and 250 mm in height. The battery pack includes 12 battery modules, which constitute an integrated battery management system (BMS). Each battery module consists of 8 lithium iron phosphate aluminum housing batteries (width 150 mm * thickness 30 mm * height 100 mm). A total amount of refrigerant added is 20 kg, and a filing rate is 88%. The first fluorine-containing cooling medium of 1, 1, 2, 2-tetrafluoroethyl methyl ether accounts for 90% of the total weight of the refrigerant, the second fluorine-containing cooling medium of hexafluoropropylene dimer accounts for 8% of the total weight of the refrigerant, the antioxidant of bisphenol A accounts for 1% of the total weight of the refrigerant, and the preservative of diazolidinyl urea accounts for 1% of the total weight of the refrigerant. The pressure of the battery pack sealing system is set to 1 bar and the temperature is 35°C. When the battery pack runs stably, the circulation rate of refrigerant is 5 ± 0.2 kg/h.

### Embodiments 2-12 and comparative examples 1-4

The total amount of refrigerant in embodiments 2-12 and the comparative examples 1-4 is the same as that in embodiment 1, except that the type and amount of the first fluorine-containing cooling medium and the second fluorine-containing cooling medium are different, and other conditions are the same as those in embodiment 1, as shown in Table 1.

### Test method of related parameters:

### Battery pack temperature drop test

The temperature monitoring device detects the maximum temperature difference inside the battery pack before the cooling system is started and within 30 minutes after the cooling system is started.

### Flame retardant properties test

Self-extinguishing time (SET) was used to evaluate the flammability of cooling medium. The specific steps are to make glass wool balls with a diameter of about 3 mm to 5 mm from glass fiber cotton, place them on barbed wire, take out respectively the cooling medium samples to be tested with syringes, and inject 5g of the cooling medium samples to be tested into the glass wool balls respectively before fast ignition, and the ignition time is controlled at 2s. The time from the time when the ignition device is removed to the time when the flame automatically extinguishes is recorded, which is called self-extinguishing time. The mass difference of the syringe before and after injection is measured as the mass of cooling medium. The self-extinguishing time per unit mass of cooling medium is calculated and used to compare the flame retardant performance of cooling medium samples. The shorter the self-extinguishing time per unit mass of cooling medium, the better the flame retardant properties.

### Refrigerant temperature test at the outlet of the case

After the cooling system is started, data is collected every 30 seconds (s) by the temperature detection device, and the change of refrigerant temperature at the refrigerant outlet of the case with time is monitored in real time.

**Table 1 Fluorine-containing cooling media used in embodiments and comparative examples and test results**

| Number | Fluorine-containing cooling medium/weight ratio | ¹Amount of first fluorine-containing cooling medium/wt% | Amount of second fluorine-containing cooling medium/wt% | Battery pack temperature drop (°C) | Maximum temperature difference (°C) of refrigerant temperature fluctuation at the outlet of case | SET evaluation (s) |
|---|---|---|---|---|---|---|
| Embodiment 1 | 1, 1, 2, 2-tetrafluoroethyl methyl ether: Hexafluoropropylene dimer=11.25:1 | 90 | 8 | 24 | 16 | 29 |
| Embodiment 2 | 1, 1, 2, 2-tetrafluoroethyl methyl ether: Hexafluoropropylene dimer=5:1 | 81.7 | 16.3 | 24 | 10 | 18 |
| Embodiment 3 | 1, 1, 2, 2-tetrafluoroethyl methyl ether: Hexafluoropropylene dimer=4:1 | 78.4 | 19.6 | 24 | 7 | 13 |
| Embodiment 4 | 1, 1, 2, 2-tetrafluoroethyl methyl ether: Hexafluoropropylene dimer=3:1 | 73.5 | 24.5 | 24 | 7 | 13 |
| Embodiment 5 | 1, 1, 2, 2-tetrafluoroethyl methyl ether: Hexafluoropropylene dimer=2:1 | 65.3 | 32.7 | 23 | 6 | 12 |
| Embodiment 6 | 1, 1, 2, 2-tetrafluoroethyl methyl ether: Hexafluoropropylene dimei=1.5:1 | 58.8 | 39.2 | 23 | 5 | 9 |
| Embodiment 7 | 1, 1, 2, 2-tetrafluoroethyl methyl ether: Hexafluoropropylene dimer=1:1 | 49 | 49 | 22 | 4 | 9 |
| Embodiment 8 | 1, 1, 2, 2-tetrafluoroethyl methyl ether+Hexafluoropropylene dimer=0.8:1 | 43.6 | 54.4 | 18 | 12 | 9 |
| Embodiment 9 | 1, 1, 2, 2-tetrafluoroethyl methyl ether+Hexafluoropropylene dimer=0.7:1 | 40 | 58 | 12 | 15 | 9 |
| Embodiment 10 | 1, 1, 2, 2-tetrafluoroethyl methyl ether: Perfluorohexanone=1:1 | 49 | 49 | 24 | 4 | 7 |
| Embodiment 11 | 1, 1, 2, 2-tetrafluoroethyl methyl ether: Hexafluoro-2-methyl isopropanol= 1: 1 | 49 | 49 | 24 | 4 | 8 |
| Embodiment 12 | methyl nonfluorobutyl ether: Hexafluoro-2-methyl isopropanol= 1: 1 | 49 | 49 | 19 | 6 | 9 |
| Comparative example 1 | 1, 1, 2, 2-tetrafluoroethyl methyl ether | 98 | 0 | 25 | 10 | 20 |
| Comparative example 2 | Hexafluoropropylene dimer | 0 | 98 | 17 | 13 | 8 |
| Comparative example 3 | Perfluorohexanone | 0 | 98 | 20 | 12 | 6 |
| Comparative example 4 | Hexafluoro-2-methyl isopropanol | 0 | 98 | 19 | 12 | 7 |

| | | | | | | |
|---|---|---|---|---|---|---|
| ¹The percentage of the first cooling medium to the total weight of refrigerant, the same below. | | | | | | |

As can be seen from Table 1, the refrigeration and flame retardant properties of embodiments 1 to 12 are improved or at least equivalent to those of comparative examples 1 and 2, which indicates that the combination of the first fluorine-containing cooling medium and the second fluorine-containing cooling medium is beneficial to improve the comprehensive performance of the battery pack. At the same time, the temperature fluctuation of the refrigerant at the outlet of the case in embodiments 1 to 12 is relatively small, which indicates that the simultaneous use of the two cooling media is beneficial to promote the smooth operation of the battery pack cooling system. In addition, by further adjusting the type and amount ratio of the first fluorine-containing cooling medium and the second fluorine-containing cooling medium, the comprehensive performance of the battery pack can be further improved.

It should be noted that the present application is not limited to the above embodiments. The above-mentioned embodiments are only examples, and the embodiments having substantially the same structure as the technical idea and exerting the same function and effect within the scope of the technical solution of the present application are all included in the technical scope of the present application. Further, without departing from the scope of the present application, application of various modifications that are conceivable to those skilled in the art to the embodiments, and other ways constructing by combining a part of the constituent elements of the embodiments are also included in the scope of the present application.

## Claims

1. A battery pack, comprising:
a battery cell at least partially immersed in a refrigerant;
a case accommodating the battery cell and the refrigerant and provided with an outlet and an inlet for the refrigerant;
a circulating pipeline located outside the case, connecting the outlet and the inlet for the refrigerant to form a closed system;
a heat exchanger and a condenser located on the circulating pipeline;
a pressure measuring module provided with one end arranged inside the case and configured for detecting an internal pressure of the case;
a temperature monitoring device for detecting a temperature of the battery cell and a fluorine-containing cooling medium in real time; and
a battery control module for managing the battery cell;
wherein the refrigerant comprises at least a first fluorine-containing cooling medium and a second fluorine-containing cooling medium, the first fluorine-containing cooling medium is selected from a fluorinated ether, and the second fluorine-containing cooling medium is selected from one or more of a fluorinated hydrocarbon, a perfluoroketone or a fluorinated alcohol.

2. The battery pack according to claim 1, wherein
the first fluorine-containing cooling medium accounts for 40-90%, optionally accounts for 43-82%, more optionally accounts for 45-73%, and further optionally accounts for 49-59% of a total weight of the refrigerant; and
the second fluorine-containing cooling medium accounts for 10-60%, optionally accounts for 16-55%, more optionally accounts for 25-53%, and further optionally accounts for 39-49% of the total weight of the refrigerant.

3. The battery pack according to any one of claims 1 or 2, wherein
a ratio of amounts by weight of the first fluorine-containing cooling medium and the second fluorine-containing cooling medium is 4: 1-1: 1, and optionally 1.5: 1-1: 1.

4. The battery pack according to claims 1 to 3, wherein a sum of the first fluorine-containing cooling medium and the second fluorine-containing cooling medium accounts for more than 95% of the total weight of the refrigerant.

5. The battery pack according to any one of claims 1 to 4, wherein the refrigerant has a filing rate of 80%-95%, optionally 85%-90%.

6. The battery pack according to any one of claims 1 to 5, wherein
the first fluorine-containing cooling medium is selected from one or more of the following materials: 1, 1, 2, 2-tetrafluoroethyl methyl ether, methyl nonfluorobutyl ether, 1, 1, 2, 2-tetrafluoroethyl-2, 2, 2-trifluoroethyl ether, 2H-hexafluoropropyl-2, 2, 3, 3-tetrafluoroether; and
the second fluorine-containing cooling medium is selected from one or more of the following materials: heptafluoropropane, hexafluoropropane, trichloromonofluoromethane, trichlorotrifluoroethane, perfluorohexanone, hexafluoropropene dimer, hexafluoro-2-methylisopropanol.

7. The battery pack according to any one of claims 1 to 6, wherein the temperature monitoring device comprises:
an optical fiber;
a reflected light elimination device; and
a light source module comprising a light source, a light source driving module, a light detection module, a control module and an optical coupler.

8. The battery pack according to claim 7, wherein the reflected light elimination device is formed by winding the optical fiber in one or more turns and fixing the optical fiber.

9. The battery pack according to any one of claims 6 to 8, wherein the optical fiber is coated with a metal material resistant to corrosion by the fluorine-containing cooling medium at an outside, and the metal material is optionally nickel or copper.

10. An electrical device comprising the battery pack according to any one of claims 1 to 9.
